# EUROPEAN PATENT SPECIFICATION

(11) **EP 3 582 056 B1**
(45) Date of publication and mention of the grant of the patent: **14.05.2025**
(21) Application number: 18853701.3
(22) Date of filing: 07.08.2018
(51) Int. Cl.: B60W 60/00, B60W 40/09

(54) **DATA TRAINING METHOD AND DEVICE FOR AUTONOMOUS VEHICLE**
DATENTRAININGSVERFAHREN UND -VORRICHTUNG FÜR AUTONOMES FAHRZEUG
PROCÉDÉ ET DISPOSITIF D'APPRENTISSAGE DE DONNÉES POUR VÉHICULE AUTONOME

(30) Priority: 05.09.2017 CN 201710790859
(43) Date of publication of application: 18.12.2019
(73) Proprietor: Apollo Intelligent Driving Technology (Beijing) Co., Ltd., Haidian District Beijing 100085 (CN)
(72) Inventor: YU, Hao, Beijing 100085 (CN); YAN, Yongshan, Beijing 100085 (CN); ZHENG, Chao, Beijing 100085 (CN); TANG, Kun, Beijing 100085 (CN); ZHANG, Yunfei, Beijing 100085 (CN); JIANG, Yu, Beijing 100085 (CN)
(74) Representative: V.O.
(86) International application number: PCT/CN2018/099173
(87) International publication number: WO 2019/047657

(56) References cited:
- EP-A1- 3 115 272
- CN-A- 104 108 395
- CN-A- 105 711 591
- CN-A- 106 503 393
- CN-A- 107 491 073
- CN-A- 107 564 363
- DE-A1- 102016 224 291
- US-A1- 2016 318 515
- US-A1- 2016 347 328
- US-A1- 2017 197 618
- US-B1- 7 512 487
- MARIUSZ BOJARSKI ET AL: "End to End Learning for Self-Driving Cars", ARXIV.ORG, CORNELL UNIVERSITY LIBRARY, 201 OLIN LIBRARY CORNELL UNIVERSITY ITHACA, NY 14853, 25 April 2016 (2016-04-25), XP080697746
- HAO YU .: "Baidu Driving Dataset and End-to-End Reactive Control Model", 2017 IEEE INTELLIGENT VEHICLES SYMPOSIUM, 14 June 2017 (2017-06-14), XP033133730

## Description

### CROSS-REFERENCE TO RELATED APPLICATIONS

This patent claims priority to Chinese Patent Application No. 201710790859.0, filed on September 5, 2017, applicant of which is Baidu Online Network Technology (Beijing) Co., Ltd., titled "Data Training Method and Apparatus for Autonomous driving Vehicle".

### TECHNICAL FIELD

The present invention relates to the field of computer technology, specifically to the technical field of autonomous driving vehicle, and more specifically to a data training method and apparatus for an autonomous driving vehicle.

### BACKGROUND

Autonomous driving vehicle is a new type of intelligent vehicle, which performs precise control and calculation analysis on various parts of the vehicle mainly through a vehicle-mounted terminal device such as an ECU (Electronic Control Unit) to realize fully automatic operation of the vehicle, achieving the purpose of autonomous driving of the vehicle. In the existing technology, the vehicle-mounted terminal device is usually trained using a machine learning method. Therefore, the acquisition of training data is of great significance for the safe driving of the autonomous driving vehicle.

The autonomous driving vehicle is capable of executing a vehicle control instruction to implement accurate operation of autonomous driving. However, the actual road condition usually does not have strict and accurate information, causing the autonomous driving vehicle to deviate from the actual road condition when performing autonomous driving according to the vehicle control instruction. When the deviation reaches a certain level, some parameters measured by the autonomous driving vehicle may be out of a preset range, thereby making the autonomous driving vehicle unable to execute the vehicle control instruction. When this happens, it is usually necessary to enter a manual driving mode for a driver to control the vehicle to return to the normal driving state. However, the situation that the autonomous driving vehicle cannot execute the vehicle control instruction is highly random, and it is often difficult to acquire possible deviations by conventional means. At the same time, the manual driving mode also has similar uncertainties, which is also difficult to acquire corresponding data, thus reducing the safety of autonomous driving.
It is noted that patent publication US2016/347328A1 discloses a driving assistance device and a driving assistance method for assisting driving of a vehicle using switching between an automatic driving mode and a manual driving mode by a driver. A driving operation in the automatic driving mode is corrected based on driving operations by the driver, as triggered by occurrence of switching in driving of the vehicle from the automatic driving mode to the manual driving mode.
It is further noted that patent publication US2016/318515A1 discloses a system for automated operation of a host-vehicle including a controller configured to operate the host-vehicle during automated operation of the host-vehicle.
It is further noted that patent publication US2017/197618A1 discloses a vehicle system and a method of controlling a host vehicle traveling in a driving lane with an object adjacent to the driving lane.
It is further noted that patent publication EP3115272A1 discloses a control system of an automated driving vehicle and a method of controlling an automated driving vehicle.

### SUMMARY

An objective of the present invention includes providing a data training method and apparatus for an autonomous driving vehicle, to solve the technical problem mentioned in the above Background section. According to a first aspect of the invention, a data training method according to claim 1 is provided. According to a second aspect of the invention, a data training apparatus according to claim 6 is provided.

In some embodiments, the correction sample is acquired by: acquiring vehicle data for the autonomous driving vehicle; determining whether the autonomous driving vehicle is switched from an autonomous driving mode to a manual driving mode, and then from the manual driving mode to the autonomous driving mode based on the vehicle data; determining a first switching moment of switching to the manual driving mode, in response to determining that the autonomous driving vehicle switches from the autonomous driving mode to the manual driving mode, and determining a second switching moment of switching to the autonomous driving mode, in response to determining that the autonomous driving vehicle switches from the manual driving mode to the autonomous driving mode; and marking vehicle data acquired between the first switching moment and the second switching moment as the correction sample.

In some embodiments, the vehicle data includes the sensor data; and the determining whether the autonomous driving vehicle is switched from an autonomous driving mode to a manual driving mode, includes: determining whether pressure data acquired by a pressure sensor on a steering wheel of the autonomous driving vehicle is greater than a preset pressure threshold; and/or determining whether temperature data acquired by a temperature sensor on the steering wheel of the autonomous driving vehicle is greater than a preset temperature threshold; and determining that the autonomous driving vehicle is switched from the autonomous driving mode to the manual driving mode, if the pressure data is greater than the preset pressure threshold and/or the temperature data is greater than the preset temperature threshold.

In some embodiments, the vehicle data includes expected driving data and actual driving data; and the determining whether the autonomous driving vehicle is switched from an autonomous driving mode to a manual driving mode, includes: determining whether a difference between the expected driving data and the actual driving data is greater than a preset threshold; and determining that the autonomous driving vehicle is switched from the autonomous driving mode to the manual driving mode, if the difference is greater than the preset threshold.

In some embodiments, the method further includes: marking vehicle data acquired within a preset time period before the first switching moment as a negative sample for characterizing the interference encountered by the autonomous driving vehicle.

In some embodiments, the apparatus further includes: a correction sample acquisition unit, configured to acquire the correction sample, and the correction sample acquisition unit includes: a vehicle data acquisition subunit, configured to acquire vehicle data for the autonomous driving vehicle; a driving mode determining subunit, configured to determine whether the autonomous driving vehicle is switched from an autonomous driving mode to a manual driving mode, and then from the manual driving mode to the autonomous driving mode based on the vehicle data; a switching moment determining subunit, configured to determine a first switching moment of switching to the manual driving mode, in response to determining that the autonomous driving vehicle switches from the autonomous driving mode to the manual driving mode, and determine a second switching moment of switching to the autonomous driving mode, in response to determining that the autonomous driving vehicle switches from the manual driving mode to the autonomous driving mode; and a first marking subunit, configured to mark vehicle data acquired between the first switching moment and the second switching moment as the correction sample.

In some embodiments, the vehicle data includes the sensor data; and the driving mode determining subunit includes: a first judging module, configured to determine whether pressure data acquired by a pressure sensor on a steering wheel of the autonomous driving vehicle is greater than a preset pressure threshold; and/or a second judging module, configured to determine whether temperature data acquired by a temperature sensor on the steering wheel of the autonomous driving vehicle is greater than a preset temperature threshold; and a first determining module, configured to determine that the autonomous driving vehicle is switched from the autonomous driving mode to the manual driving mode, if the pressure data is greater than the preset pressure threshold and/or the temperature data is greater than the preset temperature threshold.

In some embodiments, the vehicle data includes expected driving data and actual driving data; and the driving mode determining subunit includes: a third judging module, configured to determine whether a difference between the expected driving data and the actual driving data is greater than a preset threshold; and a second determining module, configured to determine that the autonomous driving vehicle is switched from the autonomous driving mode to the manual driving mode, if the difference is greater than the preset threshold.

In some embodiments, the apparatus further includes: a second marking unit, configured to mark vehicle data acquired within a preset time period before the first switching moment as a negative sample for characterizing the interference encountered by the autonomous driving vehicle.

In a third aspect, a server according to claim 11 is provided.

In a fourth aspect, a computer readable storage medium according to claim 12 is provided.

According to the data training method and apparatus for an autonomous driving vehicle provided by the embodiments of the present disclosure, first sensor data of the autonomous driving vehicle and a correction sample are acquired, then an end-to-end model is built using the sensor data and the correction sample, thereby improving the driving safety of the autonomous driving vehicle.

### BRIEF DESCRIPTION OF THE DRAWINGS

After reading detailed descriptions of nonlimiting embodiments with reference to the following accompanying drawings, other features, objectives and advantages of the present invention will become more apparent:
Fig. 1 is a diagram of an exemplary system architecture in which the present invention may be implemented;
Fig. 2 is a flowchart of an embodiment of a data training method for an autonomous driving vehicle according to the present invention;
Fig. 3 is a schematic diagram of an application scenario of the data training method for an autonomous driving vehicle according to the present invention;
Fig. 4 is a schematic structural diagram of an embodiment of a data training apparatus for an autonomous driving vehicle according to the present invention; and
Fig. 5 is a schematic structural diagram of a computer system adapted to implement a server of the embodiments of the present invention.

### DETAILED DESCRIPTION OF EMBODIMENTS

The present invention will be further described below in detail in combination with the accompanying drawings and the embodiments. It may be appreciated that the specific embodiments described herein are not intended to limit the scope of the invention, which is defined by the appended claims.

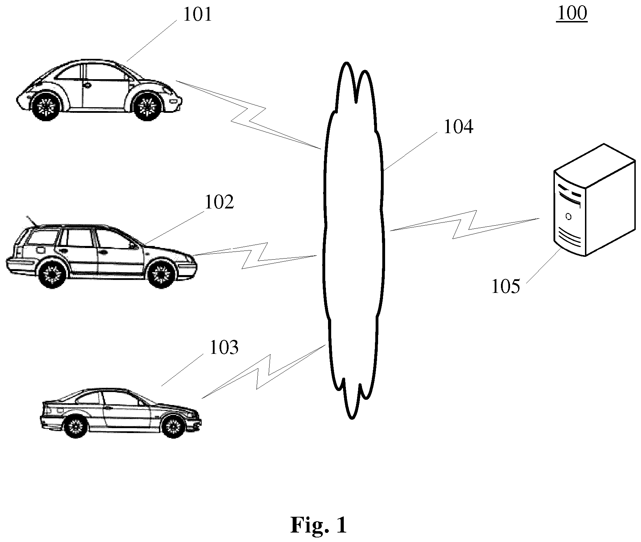

Fig. 1 illustrates an exemplary system architecture 100 of an embodiment of a data training method for an autonomous driving vehicle or a data training apparatus for an autonomous driving vehicle in which the present invention may be implemented.

As shown in Fig. 1, the system architecture 100 may include autonomous driving vehicles 101, 102, 103, a network 104, and a server 105. The network 104 is used to provide a communication link medium between the autonomous driving vehicles 101, 102, 103 and the server 105. The network 104 may include various types of connections, such as wired, wireless communication links, or optic fibers.

The autonomous driving vehicles 101, 102, 103 interact with the server 105 through the network 104 to receive or send messages or the like. Various electronic devices, such as pressure sensors, temperature sensors, distance sensors, data memories, or data transceivers, may be installed on the autonomous driving vehicles 101, 102, and 103.

The autonomous driving vehicles 101, 102, 103 may be various vehicles having a plurality of sample acquisition units and data training units, including but not limited to electric vehicles, oil-electric hybrid vehicles, internal combustion engine vehicles, or the like.

The server 105 may be a server that provides various services, such as a server performing data processing on sensor data and correction samples acquired by the autonomous driving vehicles 101, 102, 103 to obtain an end-to-end model. The server may analyze the sensor data and the correction samples acquired by the autonomous driving vehicles 101, 102, and 103, determine the switching between an autonomous driving mode and a manual driving mode of the autonomous driving vehicles 101, 102, and 103, and further obtain the end-to-end model.

It should be noted that the data training method for an autonomous driving vehicle provided by the embodiments may be separately executed by the autonomous driving vehicles 101, 102, 103, or may alternatively be executed by the autonomous driving vehicles 101, 102, 103 and the server 105 together. Accordingly, the data training apparatus for an autonomous driving vehicle may be disposed in the autonomous driving vehicles 101, 102, 103 or may be disposed in the server 105.

It should be understood that the number of autonomous driving vehicles, networks and servers in Fig. 1 is merely illustrative. Depending on the implementation needs, there may be any number of autonomous driving vehicles, networks and servers.

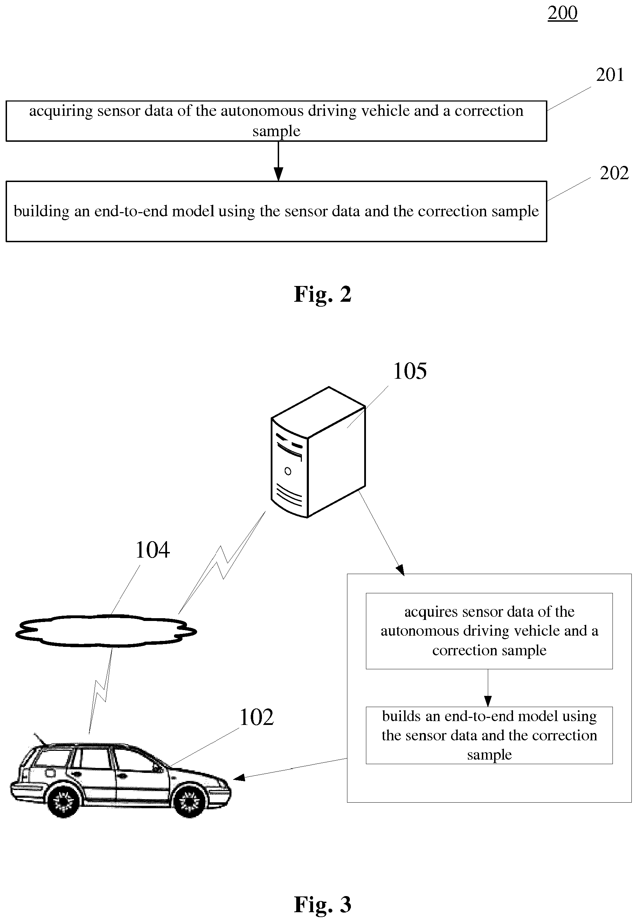

With further reference to Fig. 2, a flow 200 of an embodiment of a data training method for an autonomous driving vehicle is illustrated. The data training method for an autonomous driving vehicle includes the following steps 201 and 202.

Step 201, acquiring sensor data of the autonomous driving vehicle and a correction sample.

In the present embodiment, an electronic device (for example, the server 105 shown in Fig. 1 or a brain of the autonomous driving vehicle on the autonomous driving vehicles 101, 102, 103) on which the data training method for an autonomous driving vehicle is implemented may acquire vehicle data of the autonomous driving vehicle from the autonomous driving vehicles 101, 102, 103 through a wire connection or a wireless connection. The brain of the autonomous driving vehicle may be a vehicle-mounted electronic terminal device having data processing functions. In practice, it should be noted that the wireless connection may include but is not limited to 3G/4G connection, WiFi connection, Bluetooth connection, WiMAX connection, Zigbee connection, UWB (ultra wideband) connection, and other wireless connection now known or to be developed in the future.

Since the control method for the autonomous driving vehicles 101, 102, 103 is generally set for normal driving, when the autonomous driving vehicles 101, 102, 103 encounter an emergency (i.e., interference) during driving, the autonomous driving vehicles 101, 102, 103 themselves are often unable to output a reasonable control instruction based on the emergency. In this case, the driver is required to switch the autonomous driving vehicles 101, 102, 103 from the autonomous driving mode to the manual driving mode, to avoid the emergency through the driving behavior of the driver. The above process may acquire corresponding sensor data and correction sample. The correction sample is used for representing driving behavior data of the driver when encountering the interference during driving of the autonomous driving vehicles 101, 102, and 103.

Step 202, building an end-to-end model using the sensor data and the correction sample.

As can be seen from the above description, the sensor data and the correction sample have a corresponding relationship. The correction sample is used for representing the driving behavior data of the driver when the autonomous driving vehicles 101, 102, and 103 encounter the interference during driving, and data of the emergency corresponding to the correction sample may be found from the sensor data. The end-to-end model may then be built by learning the sensor data and the correction sample. The end-to-end model is configured for outputting a control instruction corresponding to a driving behavior of the driver through the sensor data and the correction sample.

According to the invention, the method further includes: pushing the end-to-end model to the autonomous driving vehicle and correcting the end-to-end model using measured feedback data.

After obtaining the end-to-end model, the end-to-end model is introduced into the autonomous driving vehicles 101, 102, and 103, so that the autonomous driving vehicles 101, 102, and 103 can output corresponding control instructions in time through the end-to-end model to avoid emergencies, when encountering similar emergencies. In practice, an emergency may occur at different locations or in different forms. Thus, it is also necessary to acquire data acquired by a sensor during the application of the end-to-end model on the autonomous driving vehicle, that is, the feedback data. The end-to-end model is corrected by the feedback data to improve the accuracy and robustness for outputting a control instruction by the end-to-end model.

In some alternative implementations of the present embodiment, an acquisition method for the correction sample is as follows.

The first step includes acquiring vehicle data for the autonomous driving vehicle.

In the present embodiment, an electronic device on which the data training method for an autonomous driving vehicle is implemented (for example, the server 105 shown in Fig. 1 or a brain of the autonomous driving vehicle on the autonomous driving vehicles 101, 102, 103) may acquire the vehicle data of the autonomous driving vehicle from the autonomous driving vehicles 101, 102, 103 through a wire connection or a wireless connection. The brain of the autonomous driving vehicle may be a vehicle-mounted electronic terminal device having data processing functions. In practice, it should be noted that the wireless connection may include but is not limited to 3G/4G connection, WiFi connection, Bluetooth connection, WiMAX connection, Zigbee connection, UWB (ultra wideband) connection, and other wireless connection now known or to be developed in the future.

The vehicle data may include data acquired by various types of sensors installed on the autonomous driving vehicles 101, 102, 103, such as distance data between the autonomous driving vehicles 101, 102, 103 and surrounding objects acquired by distance sensors; angle data of tire deflection directions acquired by angle sensors; driving speed data of the autonomous driving vehicles 101, 102, and 103 acquired by speed sensors; or operating temperature data of engines acquired by temperature sensors. The vehicle data may also include driving state data of the autonomous driving vehicles 101, 102, 103, for example, the autonomous driving vehicles 101, 102, 103 are currently in a constant driving state, a straight driving state, or a door opening state.

The second step includes determining whether the autonomous driving vehicle is switched from an autonomous driving mode to a manual driving mode, and then from the manual driving mode to the autonomous driving mode based on the vehicle data.

As can be seen from the above description, when the deviation between the autonomous driving of the autonomous driving vehicles 101, 102, 103 and the actual road condition reaches a certain level, the autonomous driving vehicles 101, 102, 103 may not be able to properly execute vehicle control instructions, which may easily lead to unsafe driving. In this case, it is necessary to manually switch the autonomous driving vehicles 101, 102, and 103 from the autonomous driving mode to the manual driving mode. When corresponding parameters of the autonomous driving vehicles 101, 102, 103 are returned to the normal range through the manual driving mode, the manual driving mode is switched to the autonomous driving mode. In this process, the situation in which the autonomous driving vehicles 101, 102, 103 cannot properly execute the vehicle control instructions may be considered as interference. Correspondingly, the manual driving mode process after the manual intervention may be considered as a process for eliminating the interference. When the interference is eliminated by the manual driving mode, the autonomous driving vehicles 101, 102, 103 are switched to the autonomous driving mode. The autonomous driving vehicles 101, 102, 103 may record the above process using various sensors to obtain the corresponding vehicle data.

Under normal circumstances, the autonomous driving vehicles 101, 102, 103 may drive automatically according to the route set as needed. When there is manual intervention, the autonomous driving vehicles 101, 102, 103 are switched from the autonomous driving mode to the manual driving mode, or when the manual driving mode is switched to the autonomous driving mode, the server 105 or the brain of the autonomous driving vehicle may find data corresponding to the above mode switching from the vehicle data. The present embodiment needs to determine whether the autonomous driving vehicles 101, 102, 103 are switched from the autonomous driving mode to the manual driving mode, and then from the manual driving mode to the autonomous driving mode. As can be seen from the above description, the process of switching from the autonomous driving mode to the manual driving mode and then from the manual driving mode to the autonomous driving mode may be considered as a process that an interference occurs and is eliminated. Acquiring the vehicle data in this process may help to improve the driving safety of the autonomous driving vehicles 101, 102, 103.

In some alternative implementations of the present embodiment, the vehicle data may include the sensor data; and the determining whether the autonomous driving vehicle is switched from an autonomous driving mode to a manual driving mode may include: determining whether pressure data acquired by a pressure sensor on a steering wheel of the autonomous driving vehicle is greater than a preset pressure threshold; and/or determining whether temperature data acquired by a temperature sensor on the steering wheel of the autonomous driving vehicle is greater than a preset temperature threshold; and determining that the autonomous driving vehicle is switched from the autonomous driving mode to the manual driving mode, if the pressure data is greater than the preset pressure threshold and/or the temperature data is greater than the preset temperature threshold.

In the manual driving mode, the driver needs to control the steering wheel, and in this case, pressure is applied to the steering wheel. In this way, whether the vehicle is in the manual driving mode can be monitored by the pressure sensor provided on the steering wheel. Similarly, in the manual driving mode, the driver needs to touch the steering wheel by hand. In this case, the situation that the temperature of some areas on the steering wheel is different from that of the other areas can also be detected by the temperature sensor provided on the steering wheel, so that it is detected that the autonomous driving vehicles 101, 102, and 103 are in the manual driving mode.

In some alternative implementations of the present embodiment, the vehicle data may include expected driving data and actual driving data; and the determining whether the autonomous driving vehicle is switched from an autonomous driving mode to a manual driving mode may include: determining whether a difference between the expected driving data and the actual driving data is greater than a preset threshold; and determining that the autonomous driving vehicle is switched from the autonomous driving mode to the manual driving mode, if the difference is greater than the preset threshold.

The autonomous driving vehicles 101, 102, 103 may drive autonomous driving according to the expected driving data, and simultaneously record the actual driving data of the autonomous driving vehicles 101, 102, 103. Although the driving may be subject to external interference, the autonomous driving vehicles 101, 102, 103 may be considered to be in normal autonomous driving as long as the difference between the expected driving data and the actual driving data is within a certain error range. Otherwise, when the difference between the expected driving data and the actual driving data exceeds the preset threshold, it may be considered that the driving state of the autonomous driving vehicles 101, 102, 103 is switched from the autonomous driving mode to the manual driving mode.

The above describes how to determine whether the autonomous driving vehicles 101, 102, 103 are switched from the autonomous driving mode to the manual driving mode. Similarly, whether the autonomous driving vehicles 101, 102, and 103 are switched from the manual driving mode to the autonomous driving mode may be determined by the above method, and detailed description thereof will be omitted.

The third step includes determining a first switching moment of switching to the manual driving mode, in response to determining that the autonomous driving vehicle switches from the autonomous driving mode to the manual driving mode, and determining a second switching moment of switching to the autonomous driving mode, in response to determining that the autonomous driving vehicle switches from the manual driving mode to the autonomous driving mode.

When it is determined that the autonomous driving vehicles 101, 102, 103 switches between the autonomous driving mode and the manual driving mode, the corresponding switching moment may be found from the vehicle data. In the present embodiment, the moment at which the autonomous driving vehicles 101, 102, 103 are switched from the autonomous driving mode to the manual driving mode is determined as the first switching moment; and the moment at which the autonomous driving vehicles 101, 102, 103 are switched from the manual driving mode to the autonomous driving mode is determined as the second switching moment.

The fourth step includes marking vehicle data acquired between the first switching moment and the second switching moment as the correction sample.

The first switching moment is a moment when the autonomous driving vehicles 101, 102, 103 are switched from the autonomous driving mode to the manual driving mode; and the second switching moment is a moment when the autonomous driving vehicles 101, 102, 103 are switched from the manual driving mode to the autonomous driving mode. During the time period between the first switching moment and the second switching moment, the autonomous driving vehicles 101, 102, 103 are in the manual driving mode. As can be seen from the above description, the process of the manual driving mode is an anti-interference process. Therefore, the vehicle data acquired between the first switching moment and the second switching moment may be marked as the correction sample.

In some alternative implementations of the present embodiment, the method of the present embodiment may further include: marking vehicle data acquired within a preset time period before the first switching moment as a negative sample.

Based on the description of the Background section, the autonomous driving vehicles 101, 102, 103 need to switch from the autonomous driving mode to the manual driving mode when the autonomous driving vehicles 101, 102, 103 can not perform normal autonomous driving in the autonomous driving mode. It may be determined that the autonomous driving vehicles 101, 102, 103 are disturbed (or encounter an emergency) for a period of time before switching to the manual driving mode. Therefore, the vehicle data acquired within the preset time period before the first switching moment may be marked as the negative sample. The negative sample of the present embodiment is used for characterizing the interference experienced by the autonomous driving vehicles 101, 102, 103. Here, the negative sample is used for characterizing the interference encountered by the autonomous driving vehicle, and the specific value of the preset time period is determined according to actual needs.

According to the invention, the method further includes: training a preset brain model of the autonomous driving vehicle using the correction sample and the negative sample, where the brain model of the autonomous driving vehicle is configured for predicting a vehicle control instruction based on the vehicle data.

The above may be considered as a process that the interference (negative sample) occurs and then the interference is eliminated by the control of the manual driving mode (correction sample). Therefore, the negative sample and the correction sample are used as training samples to train the brain model of the autonomous driving vehicle, so that the brain model of the autonomous driving vehicle can learn from the correction sample, how to issue a vehicle control instruction to eliminate interference caused by the negative sample in the presence of a negative sample.

With further reference to Fig. 3, Fig. 3 is a schematic diagram of an application scenario of the data training method for an autonomous driving vehicle according to the present embodiment. In the application scenario of Fig. 3, the server 105 acquires sensor data of the autonomous driving vehicle and a correction sample, and then builds an end-to-end model using the sensor data and the correction sample, so that the autonomous driving vehicle can output a correct control instruction in time when encountering similar interference.

The method provided by the above embodiment improves the driving safety of the autonomous driving vehicle.

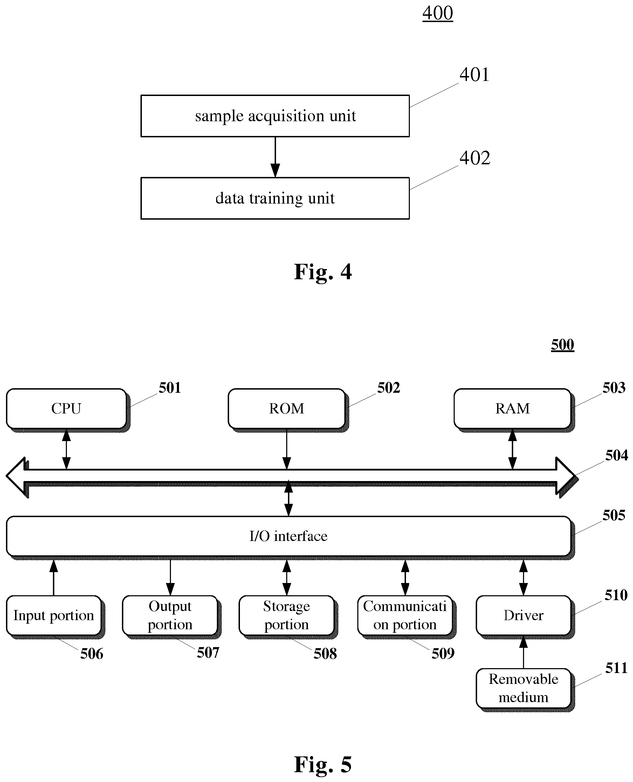

With further reference to Fig. 4, as an implementation of the method shown in the above figures, the present invention provides a data training apparatus for an autonomous driving vehicle, and the apparatus embodiment corresponds to the method embodiment as shown in Fig. 2, and the apparatus may be specifically applied to various electronic devices.

As shown in Fig. 4, a data training apparatus 400 for an autonomous driving vehicle of the present embodiment may include: a sample acquisition unit 401 and a data training unit 402. The sample acquisition unit 401 is configured to acquire sensor data of the autonomous driving vehicle and a correction sample, the correction sample being used for representing driving behavior data of a driver when the autonomous driving vehicle encounters an interference during driving. The data training unit 402 is configured to build an end-to-end model using the sensor data and the correction sample, the end-to-end model being configured for outputting a control instruction corresponding to a driving behavior of the driver using the sensor data and the correction sample.

According to the invention, the apparatus includes: a correction unit (not shown in the figure), configured to push the end-to-end model to the autonomous driving vehicle and correct the end-to-end model using measured feedback data.

In some alternative implementations of the present embodiment, the apparatus may include: a correction sample acquisition unit (not shown in the figure), configured to acquire the correction sample, and the correction sample acquisition unit may include: a vehicle data acquisition subunit (not shown in the figure), a driving mode determining subunit (not shown in the figure), a switching moment determining subunit (not shown in the figure) and a first marking subunit (not shown in the figure). The vehicle data acquisition subunit is configured to acquire vehicle data of the autonomous driving vehicle. The driving mode determining subunit is configured to determine whether the autonomous driving vehicle is switched from an autonomous driving mode to a manual driving mode, and then from the manual driving mode to the autonomous driving mode based on the vehicle data. The switching moment determining subunit is configured to determine a first switching moment of switching to the manual driving mode, in response to determining that the autonomous driving vehicle switches from the autonomous driving mode to the manual driving mode, and determine a second switching moment of switching to the autonomous driving mode, in response to determining that the autonomous driving vehicle switches from the manual driving mode to the autonomous driving mode. The first marking subunit is configured to mark vehicle data acquired between the first switching moment and the second switching moment as the correction sample.

In some alternative implementations of the present embodiment, the vehicle data may include the sensor data; and the driving mode determining subunit may include: a first judging module (not shown in the figure), a second judging module (not shown in the figure) and a first determining module (not shown in the figure). The first judging module is configured to determine whether pressure data acquired by a pressure sensor on a steering wheel of the autonomous driving vehicle is greater than a preset pressure threshold; and/or the second judging module is configured to determine whether temperature data acquired by a temperature sensor on a steering wheel of the autonomous driving vehicle is greater than a preset temperature threshold; and the first determining module is configured to determine that the autonomous driving vehicle is switched from the autonomous driving mode to the manual driving mode, if the pressure data is greater than the preset pressure threshold and/or the temperature data is greater than the preset temperature threshold.

In some alternative implementations of the present embodiment, the vehicle data may include expected driving data and actual driving data; and the driving mode determining subunit may include: a third judging module (not shown in the figure) and a second determining module (not shown in the figure). The third judging module is configured to determine whether a difference between the expected driving data and the actual driving data is greater than a preset threshold. The second determining module is configured to determine that the autonomous driving vehicle is switched from the autonomous driving mode to the manual driving mode, if the difference is greater than the preset threshold.

In some alternative implementations of the present embodiment, the data training apparatus 400 for an autonomous driving vehicle may further include: a second marking unit (not shown in the figure), configured to mark vehicle data acquired within a preset time period before the first switching moment as a negative sample for characterizing the interference encountered by the autonomous driving vehicle.

The present embodiment further provides a server, including: one or more processors; and a storage apparatus, for storing one or more programs, the one or more programs, when executed by the one or more processors, cause the one or more processors to implement the data training method for an autonomous driving vehicle.

The present embodiment further provides a computer readable storage medium, storing a computer program thereon, the program, when executed by a processor, implements the data training method for an autonomous driving vehicle.

With further reference to Fig. 5, a schematic structural diagram of a computer system 500 adapted to implement a server of the embodiments of the present invention is shown. The server shown in Fig. 5 is merely an example, and should not impose any limitation on the scope of the invention as defined by the claims.

As shown in Fig. 5, the computer system 500 may include a central processing unit (CPU) 501, which may execute various appropriate actions and processes in accordance with a program stored in a read-only memory (ROM) 502 or a program loaded into a random access memory (RAM) 503 from a storage portion 508. The RAM 503 also stores various programs and data required by operations of the system 500. The CPU 501, the ROM 502 and the RAM 503 are connected to each other through a bus 504. An input/output (I/O) interface 505 is also connected to the bus 504.

The following components are connected to the I/O interface 505: an input portion 506 including such as a keyboard, a mouse; an output portion 507 including such as a cathode ray tube (CRT), a liquid crystal display device (LCD), a speaker, etc.; a storage portion 508 including a hard disk and the like; and a communication portion 509 including a network interface card, such as a LAN card and a modem. The communication portion 509 performs communication processes via a network, such as the Internet. A driver 510 is also connected to the I/O interface 505 as required. A removable medium 511, such as a magnetic disk, an optical disk, a magneto-optical disk, and a semiconductor memory, may be installed on the driver 510, to facilitate the retrieval of a computer program from the removable medium 511, and the installation thereof on the storage portion 508 as needed.

In particular, according to the embodiments of the present invention, the process described above with reference to the flow chart may be implemented in a computer software program. For example, an embodiment of the present invention includes a computer program product, which includes a computer program that is tangibly embedded in a computer-readable medium. The computer program includes program codes for performing the method as illustrated in the flow chart. In such an embodiment, the computer program may be downloaded and installed from a network via the communication portion 509, and/or may be installed from the removable medium 511. The computer program, when executed by the central processing unit (CPU) 501, implements the above mentioned functionalities as defined by the method according to the embodiments.

It should be noted that the computer readable medium in the present according to the invention may be computer readable signal medium or computer readable storage medium or any combination of the above two. An example of the computer readable storage medium may include, but not limited to: electric, magnetic, optical, electromagnetic, infrared, or semiconductor systems, apparatus, elements, or a combination of any of the above. A more specific example of the computer readable storage medium may include but is not limited to: electrical connection with one or more wire, a portable computer disk, a hard disk, a random access memory (RAM), a read only memory (ROM), an erasable programmable read only memory (EPROM or flash memory), a fiber, a portable compact disk read only memory (CD-ROM), an optical memory, a magnet memory or any suitable combination of the above. The computer readable storage medium may be any physical medium containing or storing programs which may be used by a command execution system, apparatus or element or incorporated thereto. The computer readable signal medium may include data signal in the base band or propagating as parts of a carrier, in which computer readable program codes are carried. The propagating data signal may take various forms, including but not limited to: an electromagnetic signal, an optical signal or any suitable combination of the above. The signal medium that can be read by computer may be any computer readable medium except for the computer readable storage medium. The computer readable medium is capable of transmitting, propagating or transferring programs for use by, or used in combination with, a command execution system, apparatus or element. The program codes contained on the computer readable medium may be transmitted with any suitable medium including but not limited to: wireless, wired, optical cable, RF medium etc., or any suitable combination of the above.

The flow charts and block diagrams in the accompanying drawings illustrate architectures, functions and operations that may be implemented according to the systems, methods and computer program products of the various embodiments. In this regard, each of the blocks in the flow charts or block diagrams may represent a module, a program segment, or a code portion, said module, program segment, or code portion including one or more executable instructions for implementing specified logic functions. It should also be noted that, in some alternative implementations, the functions denoted by the blocks may occur in a sequence different from the sequences shown in the accompanying drawings. For example, any two blocks presented in succession may be executed, substantially in parallel, or they may sometimes be in a reverse sequence, depending on the function involved. It should also be noted that each block in the block diagrams and/or flow charts as well as a combination of blocks may be implemented using a dedicated hardware-based system performing specified functions or operations, or by a combination of a dedicated hardware and computer instructions.

The units involved in the embodiments may be implemented by means of software or hardware. The described units may also be provided in a processor, for example, may be described as: a processor including a sample acquisition unit and a data training unit. Here, the names of these units do not in some cases constitute limitations to such units themselves. For example, the data training unit may also be described as "a unit configured to train an end-to-end model".

In another aspect, the present invention further provides a computer readable medium. The computer readable medium may be included in the apparatus in the above described embodiments, or a stand-alone computer readable medium not assembled into the apparatus. The computer readable medium stores one or more programs. The one or more programs, when executed by the apparatus, cause the apparatus to: acquire sensor data of the autonomous driving vehicle and a correction sample, the correction sample being used for representing driving behavior data of a driver when the autonomous driving vehicle encounters an interference during driving; and build an end-to-end model using the sensor data and the correction sample, the end-to-end model being configured for outputting a control instruction corresponding to a driving behavior of the driver using the sensor data and the correction sample.

The above description only provides an explanation of the preferred embodiments of the present invention and the technical principles used. It should be appreciated by those skilled in the art that the inventive scope of the present disclosure is not limited to the technical solutions formed by the particular combinations of the above-described technical features. The inventive scope should also cover other technical solutions within the scope defined by the claims.

## Claims

1. A data training method for an autonomous driving vehicle (101, 102, 103), the method comprising:
acquiring (201) sensor data of the autonomous driving vehicle (101, 102, 103) and a correction sample, the correction sample being used for representing driving behavior data of a driver when the autonomous driving vehicle (101, 102, 103) encounters an interference during driving;
building (202) an end-to-end model using the sensor data and the correction sample, the end-to-end model being configured for outputting a control instruction corresponding to a driving behavior of the driver using the sensor data and the correction sample;
wherein building the end-to-end model and correcting the end-to-end model comprises:
pushing the end-to-end model to the autonomous driving vehicle (101, 102, 103) and correcting the end-to-end model using the sensor data; and
training a preset brain model of the autonomous driving vehicle (101, 102, 103) using the correction sample and a negative sample, wherein the brain model of the autonomous driving vehicle (101, 102, 103) is configured for predicting a vehicle control instruction based on vehicle data, the negative sample is used for characterizing the interference encountered by the autonomous driving vehicle (101, 102, 103), and the brain model of the autonomous driving vehicle (101, 102, 103) learns from the correction sample to issue a vehicle control instruction to eliminate interference caused by a negative sample in the presence of the negative sample.

2. The method according to claim 1, wherein the correction sample is acquired by:
acquiring vehicle data for the autonomous driving vehicle (101, 102, 103);
determining whether the autonomous driving vehicle (101, 102, 103) is switched from an autonomous driving mode to a manual driving mode, and then from the manual driving mode to the autonomous driving mode based on the vehicle data;
determining a first switching moment of switching to the manual driving mode, in response to determining that the autonomous driving vehicle (101, 102, 103) switches from the autonomous driving mode to the manual driving mode, and determining a second switching moment of switching to the autonomous driving mode, in response to determining that the autonomous driving vehicle (101, 102, 103) switches from the manual driving mode to the autonomous driving mode; and
marking vehicle data acquired between the first switching moment and the second switching moment as the correction sample.

3. The method according to claim 2, wherein the vehicle data comprises the sensor data; and
the determining whether the autonomous driving vehicle (101, 102, 103) is switched from an autonomous driving mode to a manual driving mode, comprises:
determining whether pressure data acquired by a pressure sensor on a steering wheel of the autonomous driving vehicle (101, 102, 103) is greater than a preset pressure threshold; and/or
determining whether temperature data acquired by a temperature sensor on the steering wheel of the autonomous driving vehicle (101, 102, 103) is greater than a preset temperature threshold; and
determining that the autonomous driving vehicle (101, 102, 103) is switched from the autonomous driving mode to the manual driving mode, if yes.

4. The method according to claim 2, wherein the vehicle data comprises expected driving data and actual driving data; and
the determining whether the autonomous driving vehicle (101, 102, 103) is switched from an autonomous driving mode to a manual driving mode, comprises:
determining whether a difference between the expected driving data and the actual driving data is greater than a preset threshold; and
determining that the autonomous driving vehicle (101, 102, 103) is switched from the autonomous driving mode to the manual driving mode, if yes.

5. The method according to claim 2, wherein the method further comprises:
marking vehicle data acquired within a preset time period before the first switching moment as a negative sample.

6. A data training apparatus for an autonomous driving vehicle (101, 102, 103), the apparatus comprising:
a sample acquisition unit (401), configured to acquire sensor data of the autonomous driving vehicle (101, 102, 103) and a correction sample, the correction sample being used for representing driving behavior data of a driver when the autonomous driving vehicle (101, 102, 103) encounters an interference during driving;
a data training unit (402), configured to build an end-to-end model using the sensor data and the correction sample, the end-to-end model being configured for outputting a control instruction corresponding to a driving behavior of the driver using the sensor data and the correction sample; and
a correction unit, configured to push the end-to-end model to the autonomous driving vehicle (101, 102, 103) and correct the end-to-end model using the sensor data; and
a model training unit, configured to train a preset brain model of the autonomous driving vehicle (101, 102, 103) using the correction sample and a negative sample, wherein the brain model of the autonomous driving vehicle (101, 102, 103) is configured for predicting a vehicle control instruction based on vehicle data, the negative sample is used for characterizing the interference encountered by the autonomous driving vehicle (101, 102, 103), and the brain model of the autonomous driving vehicle (101, 102, 103) learns from the correction sample to issue a vehicle control instruction to eliminate interference caused by a negative sample in the presence of the negative sample.

7. The apparatus according to claim 6, wherein the apparatus further comprises:
a correction sample acquisition unit, configured to acquire the correction sample, and the correction sample acquisition unit comprises:
a vehicle data acquisition subunit, configured to acquire vehicle data for the autonomous driving vehicle (101, 102, 103);
a driving mode determining subunit, configured to determine whether the autonomous driving vehicle (101, 102, 103) is switched from an autonomous driving mode to a manual driving mode, and then from the manual driving mode to the autonomous driving mode based on the vehicle data;
a switching moment determining subunit, configured to determine a first switching moment of switching to the manual driving mode, in response to determining that the autonomous driving vehicle (101, 102, 103) switches from the autonomous driving mode to the manual driving mode, and determine a second switching moment of switching to the autonomous driving mode, in response to determining that the autonomous driving vehicle (101, 102, 103) switches from the manual driving mode to the autonomous driving mode; and
a first marking subunit, configured to mark vehicle data acquired between the first switching moment and the second switching moment as the correction sample.

8. The apparatus according to claim 7, wherein the vehicle data comprises the sensor data; and
the driving mode determining subunit comprises:
a first judging module, configured to determine whether pressure data acquired by a pressure sensor on a steering wheel of the autonomous driving vehicle (101, 102, 103) is greater than a preset pressure threshold; and/or
a second judging module, configured to determine whether temperature data acquired by a temperature sensor on the steering wheel of the autonomous driving vehicle (101, 102, 103) is greater than a preset temperature threshold; and
a first determining module, configured to determine that the autonomous driving vehicle (101, 102, 103) is switched from the autonomous driving mode to the manual driving mode, if the pressure data is greater than the preset pressure threshold and/or the temperature data is greater than the preset temperature threshold.

9. The apparatus according to claim 7, wherein the vehicle data comprises expected driving data and actual driving data; and
the driving mode determining subunit comprises:
a third judging module, configured to determine whether a difference between the expected driving data and the actual driving data is greater than a preset threshold; and
a second determining module, configured to determine that the autonomous driving vehicle (101, 102, 103) is switched from the autonomous driving mode to the manual driving mode, if the difference is greater than the preset threshold.

10. The apparatus according to claim 9, wherein the apparatus further comprises:
a second marking unit, configured to mark vehicle data acquired within a preset time period before the first switching moment as a negative sample.

11. The apparatus according to claims 6 to 10, wherein the apparatus is a server.

12. A computer readable storage medium, storing a computer program thereon, the program, when executed by a processor, implements the method according to any one of claims 1-5.

## Patentansprüche

1. Datentrainingsverfahren für ein autonom fahrendes Fahrzeug (101, 102, 103), wobei das Verfahren Folgendes umfasst:
Erfassen (201) von Sensordaten des autonom fahrenden Fahrzeugs (101, 102, 103) und einer Korrekturprobe, wobei die Korrekturprobe zur Darstellung von Fahrverhaltensdaten eines Fahrers verwendet wird, wenn das autonom fahrende Fahrzeug (101, 102, 103) während der Fahrt auf eine Störung trifft;
Erstellen (202) eines End-to-End-Modells unter Verwendung der Sensordaten und der Korrekturprobe, wobei das End-to-End-Modell so konfiguriert ist, dass es eine Steueranweisung ausgibt, die einem Fahrverhalten des Fahrers unter Verwendung der Sensordaten und der Korrekturprobe entspricht;
wobei das Erstellen des End-to-End-Modells und Korrigieren des End-to-End-Modells umfasst:
Übermitteln des End-to-End-Modells an das autonom fahrende Fahrzeug (101, 102, 103) und Korrigieren des End-to-End-Modells anhand der Sensordaten;
Trainieren eines voreingestellten Gehirnmodells des autonom fahrenden Fahrzeugs (101, 102, 103) unter Verwendung der Korrekturprobe und einer Negativprobe, wobei das Gehirnmodell des autonom fahrenden Fahrzeugs (101, 102, 103) für die Vorhersage einer Fahrzeugsteuerungsanweisung auf der Grundlage von Fahrzeugdaten konfiguriert ist, die Negativprobe zur Charakterisierung der Störung, der das autonom fahrende Fahrzeug (101, 102, 103) ausgesetzt ist, verwendet wird und das Gehirnmodell des autonom fahrenden Fahrzeugs (101, 102, 103) aus der Korrekturprobe lernt, eine Fahrzeugsteuerungsanweisung zu erteilen, um Störungen zu beseitigen, die durch eine Negativprobe in Gegenwart der Negativprobe verursacht werden.

2. Verfahren nach Anspruch 1, wobei die Korrekturprobe durch Folgendes erfasst wird:
Erfassen von Fahrzeugdaten für das autonom fahrende Fahrzeug (101, 102, 103);
Bestimmen, ob das autonom fahrende Fahrzeug (101, 102, 103) von einem autonomen Fahrmodus in einen manuellen Fahrmodus und dann von dem manuellen Fahrmodus in den autonomen Fahrmodus auf der Grundlage der Fahrzeugdaten umgeschaltet wird;
Bestimmen eines ersten Umschaltzeitpunkts des Umschaltens in den manuellen Fahrmodus als Reaktion auf das Bestimmen, dass das autonom fahrende Fahrzeug (101, 102, 103) von dem autonomen Fahrmodus in den manuellen Fahrmodus umschaltet, und Bestimmen eines zweiten Umschaltzeitpunkts des Umschaltens in den autonomen Fahrmodus als Reaktion auf das Bestimmen, dass das autonom fahrende Fahrzeug (101, 102, 103) von dem manuellen Fahrmodus in den autonomen Fahrmodus umschaltet; und
Markieren der zwischen dem ersten Umschaltzeitpunkt und dem zweiten Umschaltzeitpunkt erfassten Fahrzeugdaten als Korrekturprobe.

3. Verfahren nach Anspruch 2, wobei die Fahrzeugdaten die Sensordaten umfassen; und
das Bestimmen, ob das autonom fahrende Fahrzeug (101, 102, 103) von einem autonomen Fahrmodus in einen manuellen Fahrmodus umgeschaltet wird, Folgendes umfasst:
Bestimmen, ob die von einem Drucksensor an einem Lenkrad des autonom fahrenden Fahrzeugs (101, 102, 103) erfassten Druckdaten größer als ein voreingestellter Druckschwellenwert sind; und/oder
Bestimmen, ob die von einem Temperatursensor am Lenkrad des autonom fahrenden Fahrzeugs (101, 102, 103) erfassten Temperaturdaten größer als ein voreingestellter Temperaturschwellenwert sind; und
falls ja, Bestimmen, dass das autonom fahrende Fahrzeug (101, 102, 103) von dem autonomen Fahrmodus in den manuellen Fahrmodus umgeschaltet wird.

4. Verfahren nach Anspruch 2, wobei die Fahrzeugdaten erwartete Fahrdaten und tatsächliche Fahrdaten umfassen; und
das Bestimmen, ob das autonom fahrende Fahrzeug (101, 102, 103) von einem autonomen Fahrmodus in einen manuellen Fahrmodus umgeschaltet wird, Folgendes umfasst:
Bestimmen, ob eine Differenz zwischen den erwarteten Fahrdaten und den tatsächlichen Fahrdaten größer ist als ein voreingestellter Schwellenwert; und
falls ja, Bestimmen, dass das autonom fahrende Fahrzeug (101, 102, 103) von dem autonomen Fahrmodus in den manuellen Fahrmodus umgeschaltet wird.

5. Verfahren nach Anspruch 2, wobei das Verfahren ferner Folgendes umfasst:
Markieren von Fahrzeugdaten, die innerhalb eines voreingestellten Zeitraums vor dem ersten Umschaltzeitpunkt erfasst wurden, als Negativprobe.

6. Datentrainingsvorrichtung für ein autonom fahrendes Fahrzeug (101, 102, 103), wobei die Vorrichtung Folgendes umfasst:
eine Probenerfassungseinheit (401), die zum Erfassen von Sensordaten des autonom fahrenden Fahrzeugs (101, 102, 103) und einer Korrekturprobe konfiguriert ist, wobei die Korrekturprobe zur Darstellung von Fahrverhaltensdaten eines Fahrers verwendet wird, wenn das autonom fahrende Fahrzeug (101, 102, 103) während der Fahrt auf eine Störung trifft;
eine Datentrainingseinheit (402), die so konfiguriert ist, dass sie ein End-to-End-Modell unter Verwendung der Sensordaten und der Korrekturprobe erstellt, wobei das End-to-End-Modell so konfiguriert ist, dass es eine Steueranweisung ausgibt, die einem Fahrverhalten des Fahrers unter Verwendung der Sensordaten und der Korrekturprobe entspricht; und eine Korrektureinheit, die so konfiguriert ist, dass sie das End-to-End-Modell an das autonom fahrende Fahrzeug (101, 102, 103) überträgt und das End-to-End-Modell anhand der Sensordaten korrigiert; und
eine Modelltrainingseinheit, die so konfiguriert ist, dass sie ein voreingestelltes Gehirnmodell des autonom fahrenden Fahrzeugs (101, 102, 103) unter Verwendung der Korrekturprobe und einer Negativprobe trainiert, wobei das Gehirnmodell des autonom fahrenden Fahrzeugs (101, 102, 103) für die Vorhersage einer Fahrzeugsteuerungsanweisung auf der Grundlage von Fahrzeugdaten konfiguriert ist, die Negativprobe zur Charakterisierung der Störung verwendet wird, denen das autonom fahrende Fahrzeug (101, 102, 103) ausgesetzt ist, und das Gehirnmodell des autonom fahrenden Fahrzeugs (101, 102, 103) aus der Korrekturprobe lernt, eine Fahrzeugsteuerungsanweisung zu erteilen, um Störungen zu beseitigen, die durch eine Negativprobe in Gegenwart der Negativprobe verursacht werden.

7. Vorrichtung nach Anspruch 6, wobei die Vorrichtung ferner Folgendes umfasst:
eine Einheit zur Erfassung von Korrekturproben, die so konfiguriert ist, dass sie die Korrekturprobe erfasst, und die Korrekturprobenerfassungseinheit Folgendes umfasst:
eine Untereinheit zur Erfassung von Fahrzeugdaten, die so konfiguriert ist, dass sie Fahrzeugdaten für das autonom fahrende Fahrzeug (101, 102, 103) erfasst;
eine Untereinheit zum Bestimmen des Fahrmodus, die konfiguriert ist, um zu bestimmen, ob das autonom fahrende Fahrzeug (101, 102, 103) von einem autonomen Fahrmodus in einen manuellen Fahrmodus und dann von dem manuellen Fahrmodus in den autonomen Fahrmodus auf der Grundlage der Fahrzeugdaten umgeschaltet wird;
eine Untereinheit zum Bestimmen des Umschaltzeitpunkts, die so konfiguriert ist, dass sie einen ersten Umschaltzeitpunkt des Umschaltens in den manuellen Fahrmodus bestimmt, wenn sie bestimmt, dass das autonom fahrende Fahrzeug (101, 102, 103) von dem autonomen Fahrmodus in den manuellen Fahrmodus umschaltet, und Bestimmen eines zweiten Umschaltzeitpunkts des Umschaltens in den autonomen Fahrmodus als Reaktion auf das Bestimmen, dass das autonom fahrende Fahrzeug (101, 102, 103) von dem manuellen Fahrmodus in den autonomen Fahrmodus umschaltet; und
eine erste Markierungsuntereinheit, die so konfiguriert ist, dass sie Fahrzeugdaten, die zwischen dem ersten Umschaltzeitpunkt und dem zweiten Umschaltzeitpunkt erfasst wurden, als die Korrekturprobe markiert.

8. Vorrichtung nach Anspruch 7, wobei die Fahrzeugdaten die Sensordaten umfassen; und
die Untereinheit zum Bestimmen des Fahrmodus Folgendes umfasst:
ein erstes Beurteilungsmodul, das so konfiguriert ist, dass es feststellt, ob die von einem Drucksensor an einem Lenkrad des autonom fahrenden Fahrzeugs (101, 102, 103) erfassten Druckdaten größer als ein voreingestellter Druckschwellenwert sind; und/oder
ein zweites Beurteilungsmodul, das so konfiguriert ist, dass es feststellt, ob die von einem Temperatursensor am Lenkrad des autonom fahrenden Fahrzeugs (101, 102, 103) erfassten Temperaturdaten größer als ein voreingestellter Temperaturschwellenwert sind; und
ein erstes Bestimmungsmodul, das so konfiguriert ist, dass es bestimmt, dass das autonom fahrende Fahrzeug (101, 102, 103) vom autonomen Fahrmodus in den manuellen Fahrmodus umgeschaltet wird, wenn die Druckdaten größer als der voreingestellte Druckschwellenwert und/oder die Temperaturdaten größer als der voreingestellte Temperaturschwellenwert sind.

9. Vorrichtung nach Anspruch 7, wobei die Fahrzeugdaten erwartete Fahrdaten und tatsächliche Fahrdaten umfassen; und
die Untereinheit zum Bestimmen des Fahrmodus Folgendes umfasst:
ein drittes Beurteilungsmodul, das so konfiguriert ist, dass es feststellt, ob eine Differenz zwischen den erwarteten Fahrdaten und den tatsächlichen Fahrdaten größer ist als ein voreingestellter Schwellenwert; und
ein zweites Bestimmungsmodul, das so konfiguriert ist, dass es bestimmt, dass das autonom fahrende Fahrzeug (101, 102, 103) von dem autonomen Fahrmodus in den manuellen Fahrmodus umgeschaltet wird, wenn die Differenz größer als der voreingestellte Schwellenwert ist.

10. Vorrichtung nach Anspruch 9, wobei die Vorrichtung ferner Folgendes umfasst:
eine zweite Markierungseinheit, die so konfiguriert ist, dass sie Fahrzeugdaten, die innerhalb eines voreingestellten Zeitraums vor dem ersten Umschaltzeitpunkt erfasst wurden, als Negativprobe markiert.

11. Vorrichtung nach einem der Ansprüche 6 bis 10, wobei die Vorrichtung ein Server ist.

12. Computerlesbares Speichermedium, auf dem ein Computerprogramm gespeichert ist, wobei das Programm, wenn es von einem Prozessor ausgeführt wird, das Verfahren nach einem der Ansprüche 1 bis 5 implementiert.

## Revendications

1. Procédé d'apprentissage de données pour un véhicule à conduite autonome (101, 102, 103), le procédé comprenant : l'acquisition (201) de données de capteur du véhicule à conduite autonome (101, 102, 103) et d 'un échantillon de correction, l'échantillon de correction étant utilisé pour représenter des données de comportement de conduite d'un conducteur lorsque le véhicule à conduite autonome (101, 102, 103) rencontre une interférence pendant la conduite ;
la construction (202) d'un modèle de bout en bout à l'aide des données de capteur et de l'échantillon de correction, le modèle de bout en bout étant configuré pour délivrer en sortie une instruction de commande correspondante à un comportement de conduite du conducteur à l'aide des données de capteur et de l'échantillon de correction ; et
la transmission du modèle de bout en bout au véhicule à conduite autonome (101, 102, 103) et la correction du modèle de bout en bout à l'aide des données de capteur ;
dans lequel la construction du modèle de bout en bout et la correction du modèle de bout en bout comprennent :
l'entraînement d'un modèle cérébral prédéfini du véhicule à conduite autonome (101, 102, 103) à l'aide de l'échantillon de correction et d'un échantillon négatif, dans lequel le modèle cérébral du véhicule à conduite autonome (101, 102, 103) est configuré pour prédire une instruction de commande du véhicule sur la base de données du véhicule, l'échantillon négatif est utilisé pour caractériser l'interférence rencontrée par le véhicule à conduite autonome (101, 102, 103) et le modèle cérébral du véhicule à conduite autonome (101, 102, 103) apprend à partir de l'échantillon de correction à exprimer une instruction de commande du véhicule pour éliminer l'interférence provoquée par un échantillon négatif en présence de l'échantillon négatif.

2. Procédé selon la revendication 1, dans lequel l'échantillon de correction est acquis par les étapes consistant à :
acquérir de données de véhicule pour le véhicule à conduite autonome (101, 102, 103) ;
déterminer si le véhicule à conduite autonome (101, 102, 103) est commuté d'un mode de conduite autonome à un mode de conduite manuel, puis du mode de conduite manuel au mode de conduite autonome sur la base des données du véhicule ;
déterminer un premier moment de commutation de commutation vers le mode de conduite manuel, en réponse à la détermination que le véhicule à conduite autonome (101, 102, 103) passe du mode de conduite autonome au mode de conduite manuel, et déterminer un deuxième moment de commutation de commutation vers le mode de conduite autonome, en réponse à la détermination que le véhicule à conduite autonome (101, 102, 103) passe du mode de conduite manuel au mode de conduite autonome ; et marquer les données du véhicule acquises entre le premier moment de commutation et le deuxième moment de commutation comme échantillon de correction.

3. Procédé selon la revendication 2, dans lequel les données du véhicule comprennent les données de capteur ; et
la détermination du passage du véhicule à conduite autonome (101, 102, 103) d'un mode de conduite autonome à un mode de conduite manuelle comprend :
la détermination du fait que les données de pression acquises par un capteur de pression sur un volant du véhicule à conduite autonome (101, 102, 103) sont supérieurs à un seuil de pression prédéfini ; et/ou
la détermination du fait que les données de températures acquises par un capteur de température sur le volant du véhicule à conduite autonome (101, 102, 103) sont supérieures à un seuil de température prédéfini ; et
la détermination du fait que le véhicule à conduite autonome (101, 102, 103) est passé du mode de conduite autonome au mode de conduite manuelle, si tel est le cas.

4. Procédé selon la revendication 2, dans lequel les données du véhicule comprennent des données de conduite attendues et des données de conduite réelles ; et
la détermination du passage du véhicule à conduite autonome (101, 102, 103) d'un mode de conduite autonome à un mode de conduite manuelle comprend :
la détermination du fait que la différence entre les données de conduite attendues et les données de conduite réelles est supérieure à un seuil prédéfini ; et
la détermination du passage du véhicule à conduite autonome (101, 102, 103) du mode de conduite autonome au mode de conduite manuelle, si tel est le cas.

5. Procédé selon la revendication 2, dans lequel le procédé comprend en outre :
le marquage des données du véhicule acquises dans une période de temps prédéfinie avant le premier moment de commutation comme échantillon négatif.

6. Appareil d'apprentissage de données pour un véhicule à conduite autonome (101, 102, 103), l'appareil comprenant :
une unité d'acquisition d'échantillon (401), configurée pour acquérir des données de capteur du véhicule à conduite autonome (101, 102, 103) et un échantillon de correction, l'échantillon de correction étant utilisé pour représenter des données de comportement de conduite d'un conducteur lorsque le véhicule à conduite autonome (101, 102, 103) rencontre une interférence pendant la conduite ;
une unité d'apprentissage de données (402), configurée pour construire un modèle de bout en bout à l'aide des données de capteur et de l'échantillon de correction, le modèle de bout en bout étant configuré pour délivrer en sortie une instruction de commande correspondant à un comportement de conduite du conducteur à l'aide des données de capteur et de l'échantillon de correction ; et
une unité de correction, configurée pour transmettre le modèle de bout en bout vers le véhicule à conduite autonome (101, 102, 103) et corriger le modèle de bout en bout à l'aide des données de capteur ; et
une unité d'apprentissage de modèle, configurée pour entraîner un modèle cérébral prédéfini du véhicule à conduite autonome (101, 102, 103) à l'aide de l'échantillon de correction et d'un échantillon négatif, le modèle cérébral du véhicule à conduite autonome (101, 102, 103) étant configuré pour prédire une instruction de commande de véhicule sur la base de données de véhicule, l'échantillon négatif étant utilisé pour caractériser l'interférence rencontrée par le véhicule à conduite autonome (101, 102, 103), et le modèle cérébral du véhicule à conduite autonome (101, 102, 103) apprenant à partir de l'échantillon de correction à émettre une instruction de commande de véhicule pour éliminer l'interférence provoquée par un échantillon négatif en présence de l'échantillon négatif.

7. Appareil selon la revendication 6, dans lequel l'appareil comprend en outre :
une unité d'acquisition d'échantillon de correction, configurée pour acquérir l'échantillon de correction, et l'unité d'acquisition d'échantillon de correction comprend :
une sous-unité d'acquisition de données de véhicule, configurée pour acquérir des données de véhicule pour le véhicule à conduite autonome 101, 102, 103)
une sous-unité de détermination de mode de conduite, configurée pour déterminer si le véhicule à conduite autonome (101, 102, 103) est commuté d'un mode de conduite autonome à un mode de conduite manuel, puis du mode de conduite manuel au mode de conduite autonome sur la base des données du véhicule ;
une sous-unité de détermination de moment de commutation, configurée pour déterminer un premier moment de commutation de commutation vers le mode de conduite manuel, en réponse à la détermination que le véhicule à conduite autonome (101, 102, 103) passe du mode de conduite autonome au mode de conduite manuel, et déterminer un deuxième moment de commutation de commutation vers le mode de conduite autonome, en réponse à la détermination que le véhicule à conduite autonome (101, 102, 103) passe du mode de conduite manuel au mode de conduite autonome ; et
une première sous-unité de marquage, configurée pour marquer les données du véhicule acquises entre le premier moment de commutation et le deuxième moment de commutation comme échantillon de correction.

8. Appareil selon la revendication 7, dans lequel les données du véhicule comprennent les données du capteur ; et
la sous-unité de détermination du mode de conduite comprend :
un premier module d'évaluation, configuré pour déterminer si les données de pression acquises par un capteur de pression sur un volant de direction du véhicule à conduite autonome (101, 102, 103) sont supérieures à un seuil de pression prédéfini ; et/ou
un deuxième module d'évaluation, configuré pour déterminer si les données de température acquises par un capteur de température sur le volant de direction du véhicule à conduite autonome (101, 102, 103) sont supérieures à un seuil de température prédéfini ; et
un premier module de détermination, configuré pour déterminer que le véhicule à conduite autonome (101, 102, 103) est commuté du mode de conduite autonome au mode de conduite manuelle, si les données de pression sont supérieures au seuil de pression prédéfini et/ou les données de température sont supérieures au seuil de température prédéfini.

9. Appareil selon la revendication 7, dans lequel les données du véhicule comprennent des données de conduite attendues et des données de conduite réelles ; et
la sous-unité de détermination du mode de conduite comprend :
un troisième module d'évaluation, configuré pour déterminer si une différence entre les données de conduite attendues et les données de conduite réelles est supérieure à un seuil prédéfini ; et
un deuxième module de détermination, configuré pour déterminer que le véhicule à conduite autonome (101, 102, 103) est commuté du mode de conduite autonome au mode de conduite manuelle, si la différence est supérieure au seuil prédéfini.

10. Appareil selon la revendication 9, dans lequel l'appareil comprend en outre :
une deuxième unité de marquage, configurée pour marquer les données du véhicule acquises dans une période de temps prédéfinie avant le premier moment de commutation comme un échantillon négatif.

11. Appareil selon les revendications 6 à 10, dans lequel l'appareil est un serveur.

12. Support de stockage lisible par ordinateur, stockant un programme informatique sur celui-ci, le programme, lorsqu'il est exécuté par un processeur, met en œuvre le procédé selon l'une quelconque des revendications 1 à 5.
